# EUROPEAN PATENT APPLICATION

(11) **EP 4 779 145 A2**
(43) Date of publication of application: **22.07.2026**
(21) Application number: 26152764.2
(22) Date of filing: 19.01.2026
(51) Int. Cl.: F02K 3/06, F02K 5/00

(54) **HYBRID AIRCRAFT PROPULSION SYSTEM**

(30) Priority: 17.01.2025 US 202519027633
(71) Applicant: RTX Corporation, Farmington, CT 06032 (US)
(72) Inventor: FROHNAPFEL, Dustin, Hebron, 06248 (US)
(74) Representative: Dehns

(57) **Abstract**

An apparatus is provided for an aircraft that includes a turbine engine (24). The turbine engine (24) includes a compressor section (42), a combustor section (44), a turbine section (46), a support structure (110), a first rotor system (92) and a second rotor system (92). The support structure (110) extends axially along an axis (34). Each rotor system (92) may include an electric machine (96) and a bladed rotor (94). The electric machine (96) includes an electric machine stator (108) and an electric machine rotor (106). The electric machine stator (108) is mounted to the support structure (110). The electric machine rotor (106) circumscribes the electric machine stator (108) and is operatively coupled to the bladed rotor (94). The electric machine (96) is configured to generate an electromagnetic field with the electric machine stator (108) and the electric machine rotor (106). The bladed rotor (94) is configured to rotate about the axis (34).

## Description

### BACKGROUND OF THE DISCLOSURE

### 1. Technical Field

This disclosure relates generally to an aircraft and, more particularly, to a propulsion system for the aircraft.

### 2. Background Information

Various types and configurations of propulsion systems for an aircraft are known in the art, including those propulsion systems which utilize electric motors and electric generators. While these known propulsion systems have various benefits, there is still room in the art for improvement.

### SUMMARY OF THE DISCLOSURE

According to an aspect of the present disclosure, an apparatus is provided for an aircraft that includes a turbine engine. The turbine engine includes a compressor section, a combustor section, a turbine section, a support structure, a first rotor system and a second rotor system. The support structure extends axially along an axis. The first rotor system includes a first electric machine and a first bladed rotor. The first electric machine includes a first electric machine stator and a first electric machine rotor. The first electric machine stator is mounted to the support structure. The first electric machine rotor circumscribes the first electric machine stator and is operatively coupled to the first bladed rotor. The first electric machine is configured to generate a first electromagnetic field with the first electric machine stator and the first electric machine rotor. The first bladed rotor is configured to rotate about the axis. The second rotor system includes a second electric machine and a second bladed rotor. The second electric machine includes a second electric machine stator and a second electric machine rotor. The second electric machine stator is mounted to the support structure. The second electric machine rotor circumscribes the second electric machine stator and is operatively coupled to the second bladed rotor. The second electric machine is configured to generate a second electromagnetic field with the second electric machine stator and the second electric machine rotor. The second bladed rotor is configured to rotate about the axis.

According to another aspect of the present disclosure, another apparatus is provided for an aircraft that includes a turbine engine. The turbine engine includes a compressor section, a combustor section, a turbine section, a support structure, a first rotor system, a second rotor system and an electrical system. The support structure extends axially along an axis through the first rotor system and the second rotor system. The first rotor system includes an electric motor and a first bladed rotor. The electric motor is attached to the support structure and is configured to drive rotation of the first bladed rotor about the axis. The first bladed rotor circumscribes the electric motor. The second rotor system includes an electric generator and a second bladed rotor. The electric generator is attached to the support structure and is configured to be mechanically powered by rotation of the second bladed rotor about the axis. The second bladed rotor circumscribes the electric generator. The electrical system is electrically coupled to the electric motor and the electric generator.

According to still another aspect of the present disclosure, another apparatus is provided for an aircraft that includes an aircraft propulsion system. The aircraft propulsion system includes a compressor section, a combustor section, a turbine section, flowpath, a first rotor system, a second rotor system, a first controller and a second controller. The flowpath extends through the compressor section, the combustor section and the turbine section. The first rotor system includes a first electric machine and a first bladed rotor disposed in a section of the aircraft propulsion system. The first electric machine is configurable as an electric motor and/or an electric generator. The first electric machine is operatively coupled to the first bladed rotor. The first bladed rotor circumscribes the first electric machine and is configured to rotate about an axis. The second rotor system includes a second electric machine and a second bladed rotor that is disposed in the section of the aircraft propulsion system. The second electric machine is configurable as an electric motor and/or an electric generator. The second electric machine is operatively coupled to the second bladed rotor. The second bladed rotor circumscribes the second electric machine and is axially next to the first bladed rotor. The second bladed rotor is configured to rotate about the axis mechanically independent of the first bladed rotor. The first controller is configured to control operation of the first electric machine. The second controller is configured to control operation of the second electric machine.

The following optional features may be applied to any of the above aspects.

The first bladed rotor may be a compressor rotor in the compressor section. The second bladed rotor may be a turbine rotor in the turbine section.

The first bladed rotor may be a propulsor rotor. The second bladed rotor may be a turbine rotor in the turbine section.

The support structure may be configured as or otherwise include a central support structure of the turbine engine.

The support structure may be configured as or otherwise include a stationary support structure of the turbine engine.

The first electric machine stator may extend circumferentially about the support structure. In addition or alternatively, the second electric machine stator may extend circumferentially about the support structure.

The first electric machine stator may be spaced radially outboard from the support structure. In addition or alternatively, the second electric machine stator may be spaced radially outboard from the support structure.

The first bladed rotor may be disposed radially outboard of the first electric machine. In addition or alternatively, the second bladed rotor may be disposed radially outboard of the second electric machine.

The first bladed rotor may circumscribe the first electric machine rotor. In addition or alternatively, the second bladed rotor may circumscribe the second electric machine rotor.

The first bladed rotor may be directly rotatable with the first bladed rotor. In addition or alternatively, the second bladed rotor may be directly rotatable with the second bladed rotor.

The first electric machine may be configured as an electric motor. The second electric machine may be configured as an electric generator.

The first electric machine and the second electric machine may each be configured as an electric motor.

The first electric machine and the second electric machine may each be configured as an electric generator.

The first bladed rotor and the second bladed rotor may be located within the compressor section.

The first bladed rotor and the second bladed rotor may be located within the turbine section.

The first bladed rotor may be located in the compressor section. The second bladed rotor may be located in the turbine section.

The first bladed rotor may be configured as or otherwise include a propulsor rotor configured to generate aircraft thrust.

The apparatus may also include a third rotor system including a third electric machine and a third bladed rotor. The third electric machine may include a third electric machine stator and a third electric machine rotor. The third electric machine stator may be mounted to the support structure. The third electric machine rotor may circumscribe the third electric machine stator and may be operatively coupled to the third bladed rotor. The third electric machine may be configured to generate a third electromagnetic field with the third electric machine stator and the third electric machine rotor. The third bladed rotor may be configured to rotate about the axis.

The first bladed rotor may be located in the compressor section. In addition or alternatively, the second bladed rotor may be located in the turbine section. In addition or alternatively, the third bladed rotor may be located in a propulsor section.

The first bladed rotor may be longitudinally next to the second bladed rotor along a flowpath of the turbine engine. The first bladed rotor may be configured to rotate about the axis independent of the second bladed rotor.

The first bladed rotor may be configured with a single array of first rotor blades arranged circumferentially about and axially aligned along the axis. In addition or alternatively, the second bladed rotor may be configured with a single array of second rotor blades arranged circumferentially about and axially aligned along the axis.

The first bladed rotor may include a plurality of first rotor blades arranged into a plurality of first arrays along the axis. In addition or alternatively, the second bladed rotor may include a plurality of second rotor blades arranged into a plurality of second arrays along the axis.

The apparatus may also include an electrical system electrically coupled to the first electric machine and the second electric machine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system at a rotor system.
FIG. 3 is a sectional schematic illustration of a portion of the aircraft propulsion system at the rotor system with a single stage rotor arrangement.
FIG. 4 is a sectional schematic illustration of a portion of the aircraft propulsion system at the rotor system with a multi-stage rotor arrangement.
FIGS. 5-8 are partial schematic illustrations of the aircraft propulsion system with various alternative arrangements.

### DETAILED DESCRIPTION

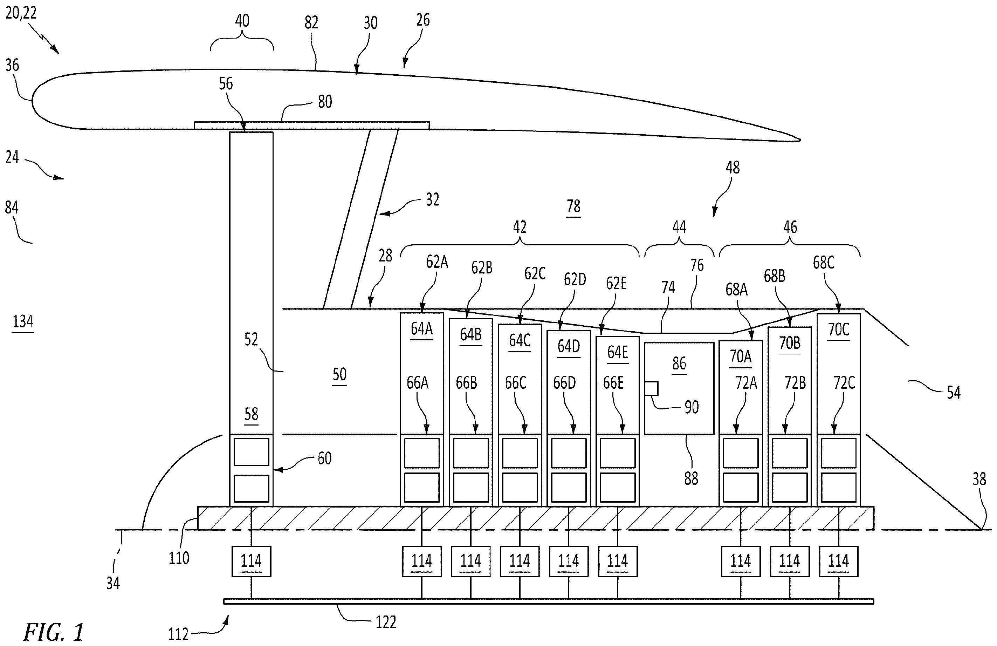

FIG. 1 illustrates a powerplant 20 for an aircraft. The aircraft may be an airplane, a rotorcraft (e.g., a helicopter), a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of propulsion system with one or more open and/or ducted propulsor rotors. Moreover, the aircraft powerplant is not limited to propulsion system applications. The aircraft powerplant, for example, may also (or alternatively) be configured as an electrical power system for the aircraft.

The aircraft propulsion system 22 includes a hybrid turbine engine 24 (e.g., a hybrid turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 extends axially along an axis 34 between an axial forward, upstream end 36 of the aircraft propulsion system 22 and an axial aft, downstream end 38 of the aircraft propulsion system 22. This propulsion system axis 34 may be a centerline axis of the aircraft propulsion system 22, the turbine engine 24 and/or one or more of its members. The propulsion system axis 34 may also or alternatively be a rotational axis for one or more members of the turbine engine 24.

The aircraft propulsion system 22 and its turbine engine 24 of FIG. 1 include a propulsor section 40 (e.g., a fan section), a compressor section 42, a combustor section 44 and a turbine section 46. At least (or only) the compressor section 42, the combustor section 44, the turbine section 46 collectively form a core 48 of the turbine engine 24; e.g., a hybrid gas generator. This engine core 48 is configured with a core flowpath 50 (e.g., an annular core flowpath) that extends longitudinally through the engine core 48 and its engine sections 42, 44 and 46 from an airflow inlet 52 into the core flowpath 50 to a combustion products exhaust 54 from the core flowpath 50.

The propulsor section 40 includes at least (or only) one propulsor rotor system 56. This propulsor rotor system 56 includes a bladed propulsor rotor 58 and a propulsor section electric machine 60, where the propulsor section electric machine 60 is configured as an electric motor for driving rotation of the propulsor rotor 58. The compressor section 42 includes one or more compressor rotor systems 62A-E (generally referred to as "62"). Each compressor rotor system 62 includes a bladed compressor rotor 64A-E (generally referred to as "64") and a compressor section electric machine 66A-E (generally referred to as "66"), where each compressor section electric machine 66 is configured as an electric motor for driving rotation of the respective compressor rotor 64. The turbine section 46 includes one or more turbine rotor systems 68A-C (generally referred to as "68"). Each turbine rotor system 68 includes a bladed turbine rotor 70A-C (generally referred to as "70") and a turbine section electric machine 72A-C (generally referred to as "72"), where each turbine section electric machine 72 is configured as an electric motor for driving rotation of the respective turbine rotor 70.

The inner housing structure 28 of FIG. 1 includes an inner case 74 (e.g., a core case) for the turbine engine 24, and an inner nacelle structure 76 (sometimes referred to as an inner fixed structure (IFS)). The inner case 74 is disposed radially outboard of, extends axially along and may circumscribe one or more or all of the engine sections 42, 44 and 46 and the rotor systems 62 and 68. The inner case 74 may thereby house and provide a support structure for the respective engine sections 42, 44 and 46 and the rotor systems 62 and 68. The inner nacelle structure 76 is configured to provide an aerodynamic cover over the engine core 48 and its inner case 74. The inner housing structure 28 and its inner nacelle structure 76 may also form a radial inner peripheral boundary of a bypass flowpath 78 (e.g., an annular bypass flowpath) within the aircraft propulsion system 22.

The outer housing structure 30 of FIG. 1 includes an outer case 80 (e.g., a fan case) for the turbine engine 24, and an outer nacelle structure 82. The outer case 80 is disposed radially outboard of, extends axially along and may circumscribe the propulsor section 40, the propulsor rotor system 56 and its propulsor rotor 58. The outer case 80 may thereby house and provide a containment structure for the propulsor section 40 and its propulsor rotor 58. The outer nacelle structure 82 is configured to provide an aerodynamic cover over the outer case 80. The outer housing structure 30 and its outer nacelle structure 82 may also form a radial outer peripheral boundary of the bypass flowpath 78.

During propulsion system operation, ambient air from outside of the aircraft enters the aircraft propulsion system 22 and its turbine engine 24 through an airflow inlet 84. This air is directed across the propulsor section 40 and into the core flowpath 50 and the bypass flowpath 78. The air entering the core flowpath 50 may be referred to as "core air". The bypass flowpath 78 bypasses (e.g., is disposed radially outboard of and extends along) the engine core 48 and the inner housing structure 28. The air within the bypass flowpath 78 may be referred to as "bypass air".

The core air is compressed by the compressor rotors 64 and is directed into a combustion chamber 86 (e.g., annular combustion chamber) of a combustor 88 (e.g., annular combustor) in the combustor section 44. Fuel is injected into the combustion chamber 86 by one or more fuel injectors 90 and mixed with the compressed core air to provide a fuel-air mixture. This fuel-air mixture is ignited and combustion products thereof flow through and sequentially drive rotation of the turbine rotors 70. The rotation of the turbine rotors 70 respectively mechanically powers operation of the turbine section electric machines 72 to generate electricity. This electricity (or electricity form another source) may then be used to electrically power operation of the compressor section electric machines 66 to drive rotation of the compressor rotors 64 and compress the core air. The electricity may also be used to electrically power operation of the propulsor section electric machine 60 to drive rotation of the propulsor rotor 58. This rotation of the propulsor rotor 58 propels the bypass air through and out of the bypass flowpath 78. The propulsion of the bypass air may account for a majority of thrust generated by the aircraft propulsion system 22 and its turbine engine 24 of FIG. 1. Within the bypass flowpath 78, the guide vane structure 32 conditions (e.g., straightens out, de-swirls, etc.) the flow of bypass air propelled by the propulsor rotor 58 to enhance the forward thrust.

By configuring each engine rotor 58, 64, 70 with its own electric machine 60, 66, 72, the operation of that electric machine 60, 66, 72 may be individually tuned to optimize propulsion system performance, propulsion system efficiency, propulsion system longevity and/or the like. This tuning may be variable during and/or across different modes of propulsion system operation. For example, a rotational speed of one or more of the compressor rotors 64 may be individually varied relative to (or timed in unison with) a rotational speed of one or more other compressor rotors 64. A rotational speed of one or more of the compressor rotors 64 may also or alternatively be individually varied relative to (or timed in unison with) a rotational speed of one or more other turbine rotors 70. A rotational speed of the propulsor rotor 58 may also or alternatively be individually varied based on a propulsion system thrust command. One or more neighboring (e.g., adjacent) pairs of the compressor rotors 64 and/or one or more neighboring pairs of the turbine rotors 70 may be operated to counter-rotate about the propulsion system axis 34 without, for example, utilizing mechanical couplings between those rotors 64, 70. This may advantageously reduce a number of stator vane stages included in the compressor section 42 and/or the turbine section 46. One or more neighboring pairs of the compressor rotors 64 (or all of the compressor rotors 64) and/or one or more neighboring pairs of the turbine rotors 70 (or all of the turbine rotors 70) may also or alternatively be operated to co-rotate about the propulsion system axis 34. Moreover, by driving the engine rotors 58, 64 with the respective electric machines 60, 66, a lag time in propulsion system response during transient operation may be reduced or substantially eliminated.

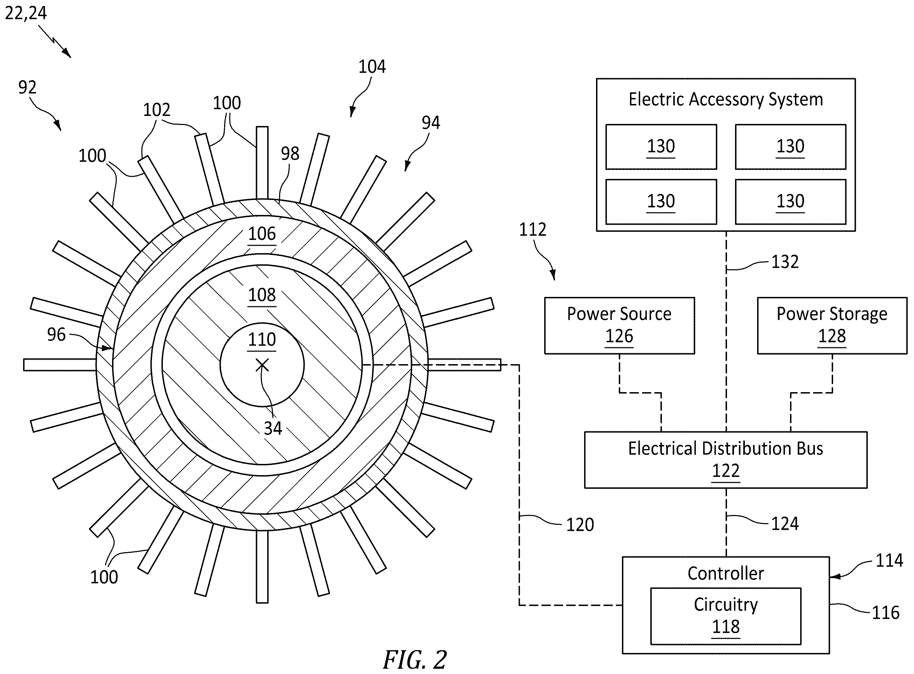

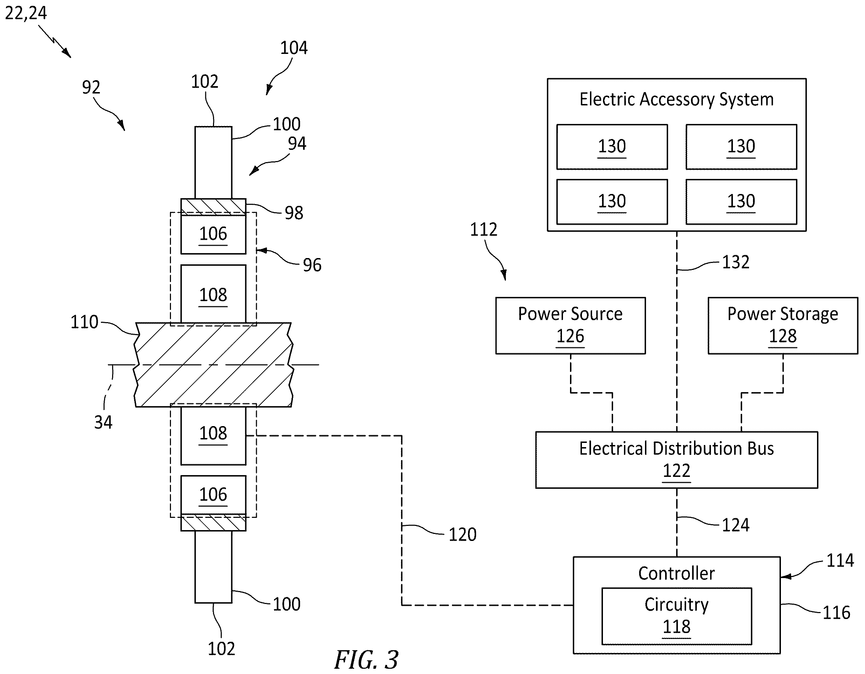

FIGS. 2 and 3 illustrate an exemplary propulsion system rotor system 92 for the aircraft propulsion system 22 and its turbine engine 24. For ease of description, each rotor system 56, 62, 68 of FIG. 1 is generally described below with reference to the propulsion system rotor system 92. This propulsion system rotor system 92 of FIGS. 2 and 3 includes a bladed propulsion system rotor 94 (e.g., 58, 64, 70) and a propulsion system electric machine 96 (e.g., 60, 66, 72).

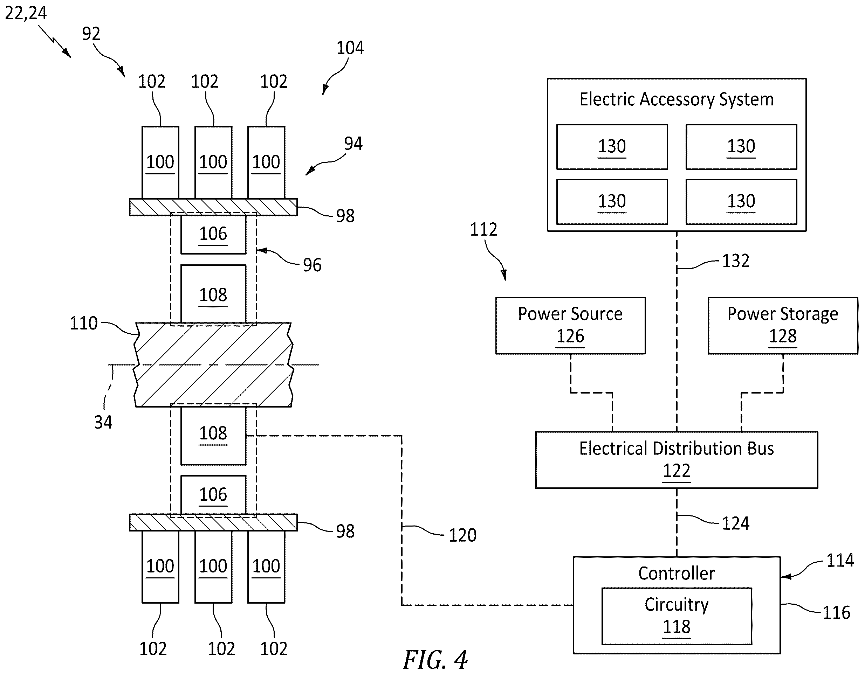

The propulsion system rotor 94 includes a rotor base 98 and a plurality of rotor blades 100. The rotor base 98 may be configured as an annular disk or hub. Each of the rotor blades 100 may be configured as an airfoil and/or a vane. The rotor blades 100 are connected to the rotor base 98. Each of the rotor blades 100, for example, may be formed integral with the rotor base 98. Alternatively, each of the rotor blades 100 may be mechanically fastened, bonded and/or otherwise attached to the rotor base 98. Each of the rotor blades 100 projects spanwise (e.g., radially relative to the propulsion system axis 34) out from the rotor base 98 to a distal end 102 (e.g., a tip) of the respective rotor blade 100. The rotor blades 100 are arranged and may be equispaced circumferentially around the rotor base 98 in an annular array; e.g., a circular array. Referring to FIG. 3, all of the rotor blades 100 of the propulsion system rotor 94 may be axially aligned along the rotor base 98. The propulsion system rotor 94 of FIG. 3 may thereby form a single stage of a respective propulsion system section 104; e.g., the engine section 40, 42, 46 of FIG. 1. The present disclosure, however, is not limited to such an exemplary arrangement. For example, referring to FIG. 4, the rotor blades 100 may alternatively be arranged into multiple arrays axially along the rotor base 98. The propulsion system rotor 94 of FIG. 4 may thereby form multiple sequential stages of the respective propulsion system section 104.

Referring to FIGS. 2 and 3, the propulsion system rotor 94 is disposed radially outboard of the propulsion system electric machine 96. The propulsion system rotor 94 and its rotor base 98 may also axially overlap and extend circumferentially about (e.g., circumscribe) the propulsion system electric machine 96. The propulsion system rotor 94 of FIGS. 2 and 3 is configured to rotate about a centerline axis of the propulsion system rotor 94. For ease of description, this rotor axis is described below as the propulsion system axis 34. The engine rotors 58, 64 and 70 of FIG. 1 may thereby be coaxial with one another along the propulsion system axis 34. A centerline of the turbine engine 24 may therefore be a straight-line axis. However, it is contemplated the rotor axis of any one or more of the engine rotors 58, 64 and/or 70 of FIG. 1 may alternatively be offset (e.g., radially offset and/or angularly offset) from the rotor axis of another one or more of the engine rotors 58, 64 and/or 70, for example to facilitate packaging with the aircraft. The centerline of the turbine engine 24 may therefore follow a non-straight (e.g., stepped, bent, etc.) trajectory to facilitate packaging the aircraft propulsion system 22 and its turbine engine 24 with an airframe of the aircraft.

Referring to FIGS. 2 and 3, the propulsion system electric machine 96 includes an electric machine rotor 106 and an electric machine stator 108. The machine rotor 106 is configured to rotate about a centerline axis of the propulsion system electric machine 96, which electric machine axis may be coaxial with the rotor axis. The machine rotor 106 of FIGS. 2 and 3 is disposed radially outboard of the machine stator 108. The machine rotor 106 also axially overlaps and extends circumferentially about (e.g., circumscribes) the machine stator 108. With this arrangement, the propulsion system electric machine 96 of FIGS. 2 and 3 is configured as a radial flux electric machine. The present disclosure, however, is not limited to such an exemplary electric machine arrangement. The machine rotor 106, for example, may alternatively be disposed axially next to the machine stator 108. The propulsion system electric machine 96 may thereby be configured as an axial flux electric machine.

The propulsion system electric machine 96 is operatively coupled to the propulsion system rotor 94. The machine rotor 106 of FIGS. 2 and 3, for example, is disposed radially between the machine stator 108 and the propulsion system rotor 94 and its rotor base 98. The machine rotor 106 may be connected to the propulsion system rotor 94 by a direct-drive coupling; e.g., a rigid mechanical connection such as a splined connection. The machine rotor 106 and the propulsion system rotor 94 may thereby rotate directly with one another about the propulsion system axis 34 of FIGS. 2 and 3. Alternatively, it is contemplated the machine rotor 106 may be indirectly connected to the propulsion system rotor 94 through a gear system and/or another power transfer device. The machine rotor 106 and the propulsion system rotor 94 may thereby rotate proportionally with one another (e.g., according to a ratio) about the propulsion system axis 34. Still alternatively, it is contemplated the machine rotor 106 may be configured integral with propulsion system rotor 94 as part of a unitary machine-propulsion system rotor.

The propulsion system rotor system 92 and its propulsion system electric machine 96 may be supported within the aircraft propulsion system 22 and its turbine engine 24 by a support structure 110; e.g., a central stationary support structure. This support structure 110 may be common to each rotor system 56, 62 and 68 of FIG. 1 and its electric machine 60, 66 and 72. The support structure 110 of FIG. 1, for example, extends axially along the propulsion system axis 34 through an inner bore of each rotor system 56, 62 and 68 and its electric machine 60, 66 and 72. Each rotor system 56, 62 and 68 and its electric machine 60, 66 and 72 may also be mounted to (e.g., fixedly attached to) the support structure 110. The machine stator 108 of FIGS. 2 and 3, for example, is disposed radially outboard of, extends axially along and extends circumferentially about (e.g., circumscribes) the support structure 110. This machine stator 108 is further mechanically attached, bonded and/or otherwise connected to the support structure 110. The support structure 110 may thereby provide a (e.g., rigid) backbone to support and maintain individual and/or collective alignment of the rotor systems 56, 62 and 68 and electric machines 60, 66 and 72 of FIG. 1.

Where the propulsion system rotor system 92 of FIGS. 2 and 3 is configured as the propulsor rotor system 56 or one of the compressor rotor systems 62 of FIG. 1, the propulsion system electric machine 96 of FIGS. 2 and 3 may be configured as an electric motor as described above. The machine stator 108, for example, may generate an electromagnetic field with the machine rotor 106 using a current of electricity received from an electrical system 112 for the aircraft and its aircraft propulsion system 22 through an electric machine (EM) controller 114 for (e.g., dedicated to) the propulsion system electric machine 96. The electromagnetic field may drive rotation of the machine rotor 106. The machine rotor 106, in turn, may provide mechanical power to and drive rotation of the propulsion system rotor 94; e.g., the engine rotor 58, 64 of FIG. 1. The propulsion system electric machine 96 may thereby convert electricity received from the aircraft electrical system 112 into mechanical power for driving the rotation of the propulsion system rotor 94. Here, the propulsion system electric machine 96 is described as a dedicated electric motor for the respective rotor system 56, 62 of FIG. 1. However, it is contemplated the propulsion system electric machine 96 may alternatively be configured as an electric motor-generator.

Where the propulsion system rotor system 92 of FIGS. 2 and 3 is configured as one of the turbine rotor systems 68 of FIG. 1, the propulsion system electric machine 96 of FIGS. 2 and 3 may be configured as an electric generator as described above. The machine rotor 106, for example, may be rotationally driven by the rotation of the propulsion system rotor 94; e.g., the engine rotor 70 of FIG. 1. The rotation of the machine rotor 106 may generate an electromagnetic field with the machine stator 108. The machine stator 108 may convert energy from the electromagnetic field into electricity. The propulsion system electric machine 96 may then provide a current of electricity to the aircraft electrical system 112 through the EM controller 114 for storage and/or further use. The propulsion system electric machine 96 may thereby convert mechanical power received from the propulsion system rotor 94 into electricity. Here, the propulsion system electric machine 96 is described as a dedicated electric generator for the respective turbine section rotor system 68. However, it is contemplated the propulsion system electric machine 96 may alternatively be configured as an electric motor-generator.

For ease of description, the propulsion system electric machine 96 (e.g., each electric machine of FIG. 1) is described herein as being electrically coupled to, controlled by and/or otherwise associated with a single, dedicated electric machine controller - the EM controller 114. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with a common electric machine.

The EM controller 114 of FIGS. 2 and 3 includes a controller housing 116 and internal controller circuitry 118 disposed within an interior of the controller housing 116. The controller circuitry 118 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

The EM controller 114 is electrically coupled to the propulsion system electric machine 96 through one or more electric cables 120 (collectively schematically shown); e.g., high voltage electric cables, power feeder cables, etc. More particularly, the controller circuitry 118 of the EM controller 114 is electrically coupled to the propulsion system electric machine 96 and its machine stator 108 through the electric cables 120. Similarly, the EM controller 114 is electrically coupled to an electrical distribution bus 122 of the aircraft electrical system 112 through one or more electric cables 124 (collectively schematically shown); e.g., high voltage electric cables, power feeder cables, etc. More particularly, the controller circuitry 118 of the EM controller 114 is electrically coupled to the aircraft electrical system 112 and its electrical distribution bus 122 through the electric cables 124.

The EM controller 114 and its controller circuitry 118 are configured to control operation of the propulsion system electric machine 96. For example, where the propulsion system electric machine 96 operates as the electric motor, the EM controller 114 and its controller circuitry 118 are configured to regulate a flow of electricity from the aircraft electrical system 112 to the propulsion system electric machine 96. This electricity flow regulation may include: (a) turning-on the flow of electricity from the aircraft electrical system 112 to the propulsion system electric machine 96 (e.g., electrically coupling the propulsion system electric machine 96 to the aircraft electrical system 112); (b) turning-off the flow of electricity from the aircraft electrical system 112 to the propulsion system electric machine 96 (e.g., electrically decoupling the propulsion system electric machine 96 from the aircraft electrical system 112); (c) moderating the flow of electricity from the aircraft electrical system 112 to the propulsion system electric machine 96. Here, the EM controller 114 operates as a motor controller. In another example, where the propulsion system electric machine 96 operates as the electric generator, the EM controller 114 and its controller circuitry 118 are configured to regulate a flow of electricity from the propulsion system electric machine 96 to the aircraft electrical system 112. This electricity flow regulation may include: (a) turning-on the flow of electricity from the propulsion system electric machine 96 to the aircraft electrical system 112 (e.g., electrically coupling the propulsion system electric machine 96 to the aircraft electrical system 112); (b) turning-off the flow of electricity from the propulsion system electric machine 96 to the aircraft electrical system 112 (e.g., electrically decoupling the propulsion system electric machine 96 from the aircraft electrical system 112); (c) moderating the flow of electricity from the propulsion system electric machine 96 to the aircraft electrical system 112. Here, the EM controller 114 operates as a generator controller.

The aircraft electrical system 112 includes the electrical distribution bus 122. This aircraft electrical system 112 may (or may not) also include a power source 126 and/or a power storage 128. The electrical distribution bus 122 may be electrically coupled to the propulsion system electric machine 96 through its EM controller 114. Here, it is contemplated the electrical distribution bus 122 may service each electric machine 60, 66 and 72 of FIG. 1. Alternatively, it is contemplated one or more of the electric machines 60, 66 and/or 72 of FIG. 1 may be arranged with a discrete electric distribution bus. Referring again to FIGS. 2 and 3, the electrical distribution bus 122 is also electrically coupled to the power source 126 and the power storage 128. With this arrangement, the electrical distribution bus 122 provides an intermediate connection between the various electrical aircraft propulsion system members 96 (via 114), 126 and/or 128. The power source 126 may be an electric generator powered by the turbine engine 24 or an electric generator powered by another aircraft powerplant; e.g., an engine of a companion aircraft propulsion system, an engine of an auxiliary power unit (APU), a fuel cell system, etc. The power storage 128 is configured to receive electricity from the electrical distribution bus 122 for storage. The power storage 128 is also configured to provide the stored electricity to the electrical distribution bus 122. The power storage 128, for example, may be configured as or otherwise include one or more electricity storage devices; e.g., batteries, super capacitors, etc. With the foregoing aircraft electrical system arrangement, the electrical current provided to one, some or all of the electric machines 60 and/or 66 of FIG. 1 may be received, through the electrical distribution bus 122 of FIGS. 2 and 3, from any one, some or all of the electric machines 72 of FIG. 1, the power source 126 of FIGS. 2 and 3 and/or the power storage 128 of FIGS. 2 and 3.

In some embodiments, the turbine engine 24 may utilize a cryogenic fluid such liquid hydrogen (H₂), liquid propane, liquid natural gas (LNG), or the like for its fuel. This fuel may be stored within a fuel reservoir (e.g., an insulated fuel tank) as a liquid. As a fuel system for the turbine engine 24 directs this fuel to the fuel injectors 90, the fuel system may facilitate a phase change from a liquid phase to a gaseous phase using one or more heat exchange devices in order to provide the gaseous fuel to the fuel injectors 90 for injection into the combustion chamber 86. It is contemplated the fuel system may be configured to cool various electric devices such as, but not limited to, one or more components of each electric machine 96, one or more components of each EM controller 114, one or more components of the aircraft electrical system 112, or the like. The fuel system may also route the cryogenic or near cryogenic fuel to facilitate superconducting.

In some embodiments, referring to FIGS. 2 and 3, the aircraft electrical system 112 may (or may not) also provide electricity to one or more electric devices 130. The electric devices 130 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 130 may be configured as part of one or more sub-systems for the aircraft propulsion system 22 and its turbine engine 24. Examples of these sub-systems include, but are not limited to: a fuel system for delivering the fuel to the fuel injectors 90 (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices 130.

Each electric device 130 is electrically coupled to the electrical distribution bus 122 of the aircraft electrical system 112 through one or more electric cables 132 (collectively schematically shown); e.g., high voltage electric cables, low voltage electric cables, power feeder cables, etc. Each electric device 130 may thereby receive a current of electricity from the aircraft electrical system 112 to power operation thereof.

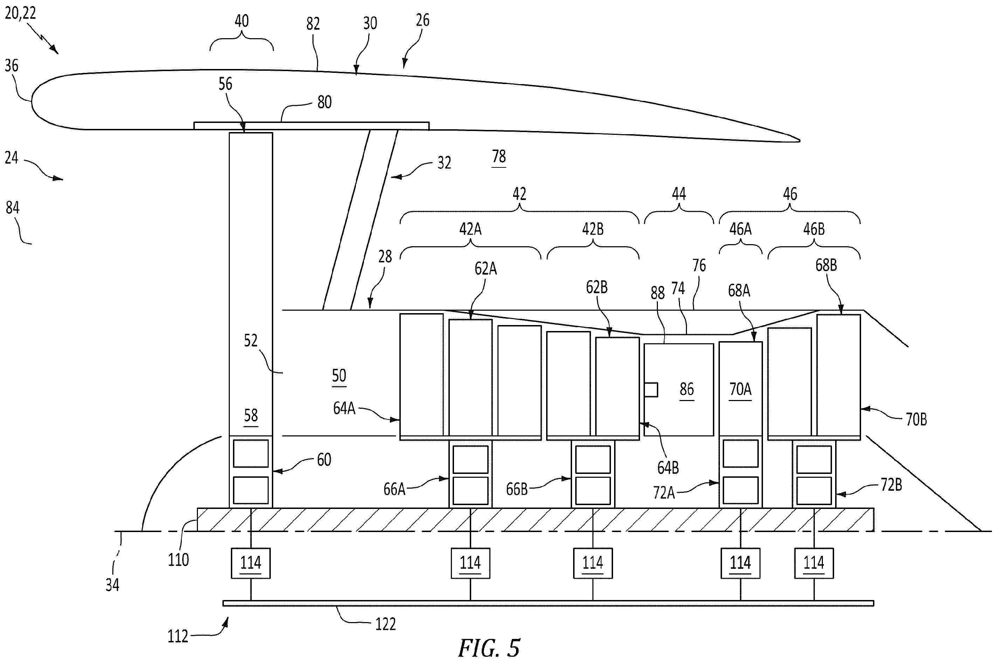

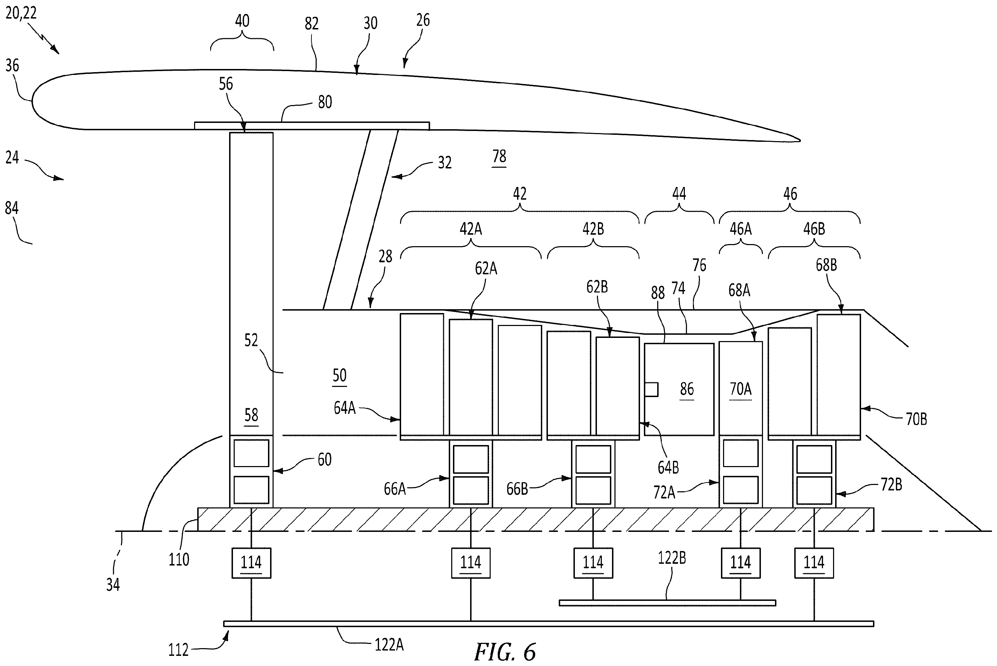

In some embodiments, referring to FIGS. 5 and 6, the compressor section 42 may include a low pressure compressor (LPC) section 42A and a high pressure compressor (HPC) section 42B. The LPC section 42A may be configured with a single low pressure compressor (LPC) rotor system 62A. The HPC section 42B may be configured with a single high pressure compressor (HPC) rotor system 62B. Here, each compressor rotor 64 may be configured with multiple stages of its rotor blades (e.g., compressor rotor blades) as generally described above with respect to FIG. 4. Similarly, the turbine section 46 may include a high pressure turbine (HPT) section 46A and a low pressure turbine (LPT) section 46B. The HPT section 46A may be configured with a single high pressure turbine (HPT) rotor system 68A. The LPT section 46B may be configured with a single low pressure turbine (LPT) rotor system 68B. Here, each turbine rotor 70 may be configured with multiple stages of its rotor blades (e.g., turbine rotor blades) as generally described above with respect to FIG. 4. With such an arrangement, a mechanical and/or electrical complexity of the aircraft propulsion system 22 and its turbine engine 24 may be reduced while still facilitating a degree of tuning as generally described above. Of course, in other embodiments, the compressor section 42 may be configured with a single (e.g., multi-stage) bladed compressor rotor and/or the turbine section 46 may be configured with a single (e.g., multi-stage) bladed turbine rotor.

In some embodiments, referring to FIG. 5, the electric machines 60, 66 and 72 of all of the rotor systems 56, 62 and 68 may be electrically coupled together through the aircraft electrical system 112 and its common electrical distribution bus 122. With such an arrangement, the electricity used to electrically power operation of any one or more of the electric machines 60 and/or 66 may be generated by any one or more of the electric machines 72. In other embodiments, referring to FIG. 6, the aircraft electrical system 112 may be configured with multiple discrete electrical distribution buses 122A and 122B (generally referred to as "122"). Each of these electrical distribution buses 122 may be configured to service a discrete set of the electric machines. For example, the first electrical distribution bus 122A may electrically couple the electric machine 72B to the electric machines 60 and 66A. The second electrical distribution bus 122B may electrically couple the electric machine 72A to the electric machine 66B. With this arrangement, a complexity of the aircraft electrical system 112 may be reduced and electrical transmission lengths may be reduced. Note, while the multiple electrical distribution buses 122 are shown with the rotor system arrangement of FIG. 6, it is contemplated a similar arrangement with two or more electrical distribution buses may also be provided for the rotor system arrangement of FIG. 1.

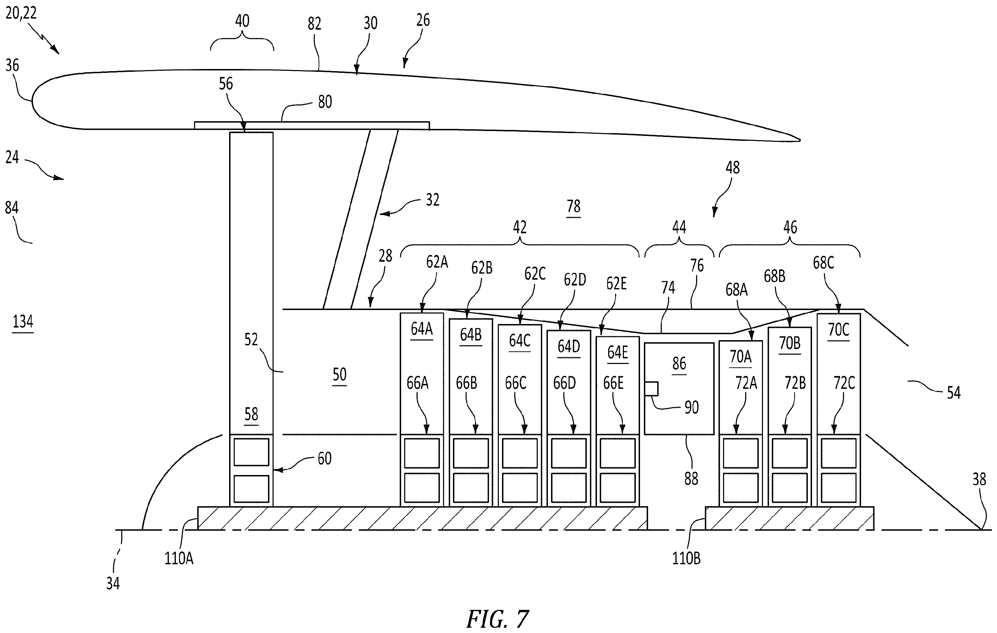

In some embodiments, referring to FIGS. 1, 5 and 6, the aircraft propulsion system 22 and its turbine engine 24 may be configured with the single support structure 110 for all of the rotor systems 56, 62 and 68. In other embodiments, referring to FIG. 7, the aircraft propulsion system 22 and its turbine engine 24 may be configured with multiple support structures 110A and 110B (generally referred to as "110"). The forward support structure 110A may be configured to support one or more or all of the rotor systems 56 and/or 62 disposed axially forward of the combustor section 44. The aft support structure 110B may be configured to support one or more or all of the rotor systems 68 disposed axially aft of the combustor section 44. With such an arrangement, additional room may be provided for the combustor section 44 and its combustor 88. Providing the multiple support structures 110 may facilitate flexibility in packaging the aircraft propulsion system 22 and its turbine engine 24 with an airframe structure of the aircraft. Moreover, providing the multiple support structures 110 may facilitate axially and/or angularly offsetting the compressor rotors 64 from the turbine rotors 70. It is also contemplated different compressor rotors 64 (or groupings of compressor rotors 64) may be provided with discrete support structures. Different turbine rotors 70 (or groupings of turbine rotors 70) may also or alternatively be provided with discrete support structures. The propulsor rotor 58 may still also or alternatively be provided with a discrete support structure.

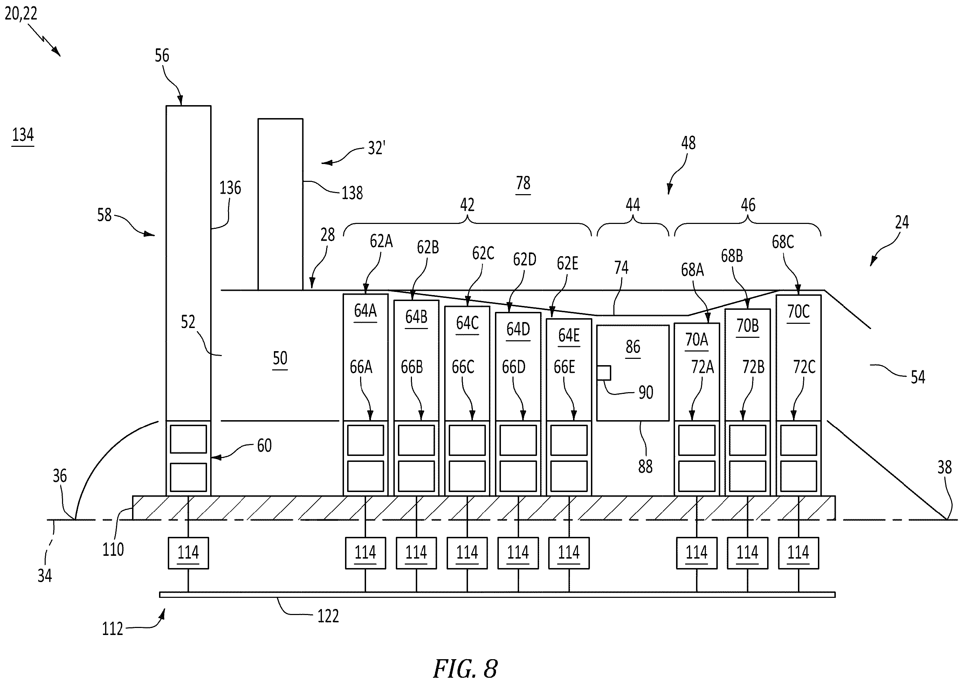

The aircraft propulsion system 22 is described above as a ducted propulsor propulsion system; e.g., the turbofan propulsion system. However, the present disclosure is not limited to such an exemplary aircraft propulsion system. For example, referring to FIG. 8, the outer housing structure 30 (see FIG. 1) may be omitted from the propulsion system housing 26 to open the propulsor rotor 58 up to an environment 134 external to the aircraft and its aircraft propulsion system 22. More particularly, the propulsor rotor 58 of FIG. 8 and its propulsor blades 136 are un-ducted and exposed to (e.g., disposed in) the surrounding external environment 134. With this arrangement, the propulsor rotor 58 is an open propulsor rotor (e.g., an un-ducted propulsor rotor) and the aircraft propulsion system 22 is configured as an open rotor propulsion system.

The aircraft propulsion system 22 of FIG. 8 is configured with an open guide vane structure 32'. This guide vane structure 32' of FIG. 8 includes a plurality of open exit guide vanes 138; e.g., airfoils. The guide vanes 138 are arranged and may (or may not) be equispaced circumferentially about the propulsion system axis 34 in an array (e.g., a circular array). This guide vane structure 32' and its guide vanes 138 are arranged axially next to (e.g., adjacent) the propulsor rotor 58 and its propulsor blades 136. The guide vane structure 32' and its guide vanes 138 of FIG. 8, for example, are arranged downstream of the propulsor rotor 58 and its propulsor blades 136, without (e.g., any) other elements axially therebetween to obstruct, turn and/or otherwise influence the air propelled by the propulsor rotor 58 to the guide vane structure 32' for example. The guide vane structure 32' and its guide vanes 138 are un-ducted and exposed to (e.g., disposed in) the surrounding external environment 134. With the foregoing arrangement, the guide vane structure 32' and its guide vanes 138 are configured to condition (e.g., straighten out, de-swirl, etc.) an outer stream of air propelled by the propulsor rotor 58 within the external environment 134 that bypass the engine core 48. Of course, in other embodiments, the guide vane structure 32' may be omitted where, for example, the aircraft propulsion system 22 is alternatively configured as a counter-rotating open rotor (CROR) aircraft propulsion system, etc.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for an aircraft, comprising:
a turbine engine (24) including a compressor section (42), a combustor section (44), a turbine section (46), a support structure (110), a first rotor system (92) and a second rotor system (92);
the support structure (110) extending axially along an axis (34);
the first rotor system (92) including a first electric machine (96) and a first bladed rotor (94), the first electric machine (96) including a first electric machine stator (108) and a first electric machine rotor (106), the first electric machine stator (108) mounted to the support structure (110), the first electric machine rotor (106) circumscribing the first electric machine stator (108) and operatively coupled to the first bladed rotor (94), the first electric machine (96) configured to generate a first electromagnetic field with the first electric machine stator (108) and the first electric machine rotor (106), and the first bladed rotor (94) configured to rotate about the axis (34); and
the second rotor system (92) including a second electric machine (96) and a second bladed rotor (94), the second electric machine (96) including a second electric machine stator (108) and a second electric machine rotor (106), the second electric machine stator (108) mounted to the support structure (110), the second electric machine rotor (106) circumscribing the second electric machine stator (108) and operatively coupled to the second bladed rotor (94), the second electric machine (96) configured to generate a second electromagnetic field with the second electric machine stator (108) and the second electric machine rotor (106), and the second bladed rotor (94) configured to rotate about the axis (34).

2. The apparatus of claim 1, wherein:
the support structure (110) comprises a central support structure of the turbine engine (24); and/or
the support structure (110) comprises a stationary support structure of the turbine engine (24).

3. The apparatus of claim 1 or 2, wherein at least one of:
the first electric machine stator (108) extends circumferentially about the support structure (110); and/or
the second electric machine stator (108) extends circumferentially about the support structure (110).

4. The apparatus of claim 1, 2 or 3, wherein at least one of:
the first bladed rotor (94) is disposed radially outboard of the first electric machine (96); and/or
the second bladed rotor (94) is disposed radially outboard of the second electric machine (96).

5. The apparatus of any preceding claim, wherein at least one of:
the first bladed rotor (94) circumscribes the first electric machine rotor (106); and/or
the second bladed rotor (94) circumscribes the second electric machine rotor (106).

6. The apparatus of any preceding claim, wherein:
the first electric machine (96) is configured as an electric motor; and
the second electric machine (96) is configured as an electric generator.

7. The apparatus of any of claims 1 to 5, wherein:
the first electric machine (96) and the second electric machine (6) are each configured as an electric motor; or
the first electric machine (96) and the second electric machine (96) are each configured as an electric generator.

8. The apparatus of any preceding claim, wherein:
the first bladed rotor (94) and the second bladed rotor (94) are located within the compressor section (42); or
the first bladed rotor (94) and the second bladed rotor (94) are located within the turbine section (46); or
the first bladed rotor (94) is located in the compressor section (42), and the second bladed rotor (94) is located in the turbine section (46).

9. The apparatus of any of claims 1 to 7, wherein the first bladed rotor (84) comprises a propulsor rotor (58) configured to generate aircraft thrust.

10. The apparatus of any preceding claim, wherein the first bladed rotor (94) is longitudinally next to the second bladed rotor (94) along a flowpath (50) of the turbine engine (24), and the first bladed rotor (94) is configured to rotate about the axis (34) independent of the second bladed rotor (94).

11. The apparatus of any preceding claim, wherein at least one of:
the first bladed rotor (94) is configured with a single array of first rotor blades (100) arranged circumferentially about and axially aligned along the axis (34); and/or
the second bladed rotor (94) is configured with a single array of second rotor blades (100) arranged circumferentially about and axially aligned along the axis (34).

12. The apparatus of any of claims 1 to 10, wherein at least one of:
the first bladed rotor (94) includes a plurality of first rotor blades (100) arranged into a plurality of first arrays along the axis (34); and/or
the second bladed rotor (94) includes a plurality of second rotor blades (100) arranged into a plurality of second arrays along the axis (34).

13. The apparatus of any preceding claim, further comprising an electrical system (112) electrically coupled to the first electric machine (96) and the second electric machine (96).

14. An apparatus for an aircraft, comprising:
a turbine engine (24) including a compressor section (42), a combustor section (44), a turbine section (46), a support structure (110), a first rotor system (92), a second rotor system (92) and an electrical system (112);
the support structure (110) extending axially along an axis (34) through the first rotor system (92) and the second rotor system (92);
the first rotor system (92) including an electric motor and a first bladed rotor (94), the electric motor (96) attached to the support structure (110) and configured to drive rotation of the first bladed rotor (94) about the axis (34), and the first bladed rotor (94) circumscribing the electric motor (96);
the second rotor system (92) including an electric generator (96) and a second bladed rotor (94), the electric generator (96) attached to the support structure (110) and configured to be mechanically powered by rotation of the second bladed rotor (94) about the axis (34), and the second bladed rotor (94) circumscribing the electric generator (96); and
the electrical system (112) electrically coupled to the electric motor (96) and the electric generator (96),
wherein, optionally:
the first bladed rotor (94) is a compressor rotor (64) in the compressor section (42); and
the second bladed rotor (94) is a turbine rotor (70) in the turbine section (46).

15. An apparatus for an aircraft, comprising:
an aircraft propulsion system (22) including a compressor section (42), a combustor section (44), a turbine section (46), flowpath (50), a first rotor system (92), a second rotor system (92), a first controller (114) and a second controller (114);
the flowpath (50) extending through the compressor section (42), the combustor section (44) and the turbine section (46);
the first rotor system (92) including a first electric machine (96) and a first bladed rotor (94) disposed in a section of the aircraft propulsion system (22), the first electric machine (96) configurable as at least one of an electric motor or an electric generator, the first electric machine (96) operatively coupled to the first bladed rotor (94), and the first bladed rotor (94) circumscribing the first electric machine (96) and configured to rotate about an axis (34);
the second rotor system (92) including a second electric machine (96) and a second bladed rotor (94) disposed in the section of the aircraft propulsion system (22), the second electric machine (96) configurable as at least one of an electric motor or an electric generator, the second electric machine (96) operatively coupled to the second bladed rotor (94), the second bladed rotor (94) circumscribing the second electric machine (96) and axially next to the first bladed rotor (94), and the second bladed rotor (94) configured to rotate about the axis (34) mechanically independent of the first bladed rotor (94);
the first controller (114) configured to control operation of the first electric machine (96); and
the second controller (114) configured to control operation of the second electric machine (96).
